Europäisches Patentamt

European Patent Office

Office européen des brevets

(11) Veröffentlichungsnummer : **0 058 754**
B1

# (12) EUROPÄISCHE PATENTSCHRIFT

(45) Veröffentlichungstag der Patentschrift :
26.06.85

(21) Anmeldenummer : 81108638.8

(22) Anmeldetag : 21.10.81

(51) Int. Cl.⁴ : **H 04 B   3/56,  H 04 L  27/04**

(54) Einrichtung zur Einspeisung von digitalen Signalen in ein Leitungssystem.

(30) Priorität : 23.02.81 DE 3106669

(43) Veröffentlichungstag der Anmeldung :
01.09.82 Patentblatt 82/35

(45) Bekanntmachung des Hinweises auf die Patenterteilung : 26.06.85 Patentblatt 85/26

(84) Benannte Vertragsstaaten :
CH DE FR GB IT LI

(56) Entgegenhaltungen :
DE-A- 2 825 240
US-A- 2 599 675
US-A- 3 846 705
US-A- 4 092 599

(73) Patentinhaber : Siemens Aktiengesellschaft
Berlin und München Wittelsbacherplatz 2
D-8000 München 2 (DE)

(72) Erfinder : Schwarz, Hermann
Hauptstrasse 31
D-8561 Henfenfeld (DE)

**Beschreibung**

Die Erfindung betrifft eine Einrichtung zur Einspeisung von digitalen Signalen in ein Leitungssystem in Form einer amplitudenmodulierten Wechselspannung.

Derartige Einrichtungen finden beispielsweise im Rahmen von Rundsteuersystemen Anwendung (DE-A1-2 825 240). Hierbei werden die ein Impulstelegramm darstellenden digitalen Signale mit einer tonfrequenten Wechselspannung als Träger in das öffentliche Stromversorgungsnetz als Leitungssystem eingespeist. Zur Amplitudenmodulation der tonfrequenten Wechselspannung zwischen einem festen Amplitudenwert und Amplitudenwert Null dienen aufwendige Wechselrichter, vorzugsweise Impulswechselrichter. Dieser Aufwand ist bei der Rund-steuertechnik gerechtfertigt, da die digitalen Signale eine erhebliche Reichweite besitzen müssen, um weit auseinanderliegende Rundsteuerempfänger zu erreichen. Für kleine Übertragungsreichweiten ist jedoch ein derartiger Aufwand nicht gerechtfertigt.

Der Erfindung liegt die Aufgabe zugrunde, eine Einrichtung der eingangs genannten Art anzugeben, die bei Beschränkung auf eine kleine Reichweite mit geringem Aufwand kostengünstig herstellbar ist. Unter dem Begriff « kleine Reichweite » wird in diesem Zusammenhang eine Reichweite verstanden, die das Ansprechen von Empfängern innerhalb eines Gebäudes oder innerhalb mehrerer benachbarter Gebäude gestattet.

Die Aufgabe wird erfindungsgemäß dadurch gelöst, daß die digitalen Signale an den einen Eingang eines Exclusiv-ODER-Gatters geführt sind, dessen zweiter Eingang an den Ausgang eines Frequenzgenerators angeschlossen ist, dessen periodisches Ausgangssignal unipolar und von höherer Frequenz ist als die maximale Wiederholungsfrequenz der digitalen Signale, daß die Primärwicklung eines Übertragers einerseits an den Ausgang des Frequenzgenerators, andererseits an den Ausgang des Exclusiv-ODER-Gatters angeschlossen ist und daß die Sekundärwicklung des Übertragers an zwei Leitungen des Leitungssystems angeschlossen ist.

Damit kann die erfindungsgemäße Einrichtung aus kostengünstigen handelsüblichen Bauelementen aufgebaut werden. Durch den Frequenzgenerator wird die Trägerfrequenz für die digitalen Signale geliefert. Die Höhe der Trägerfrequenz richtet sich nach den Gegebenheiten des Leitungssystems sowie nach Frequenz- und Formerfordernissen der digitalen Signale. Die Form der Ausgangssignale des Frequenzgenerators ist in weiten Grenzen beliebig, sie können also beispielsweise sinusförmig, dreieckförmig, rechteckförmig oder trapezförmig sein. Wesentlich ist, daß diese Ausgangssignale unipolar sind, d. h., daß sie nur auf einer Seite der Spannungsnullinie liegen und vorzugsweise zwischen einen positiven Spannungswert und dem Spannungswert Null oszillieren.

In einer bevorzugten Ausführungsform ist als Übertrager ein Übertrager mit einem Ferritkern eingesetzt. Ein solcher Übertrager gestattet eine relativ verzerrungsfreie Übertragung der Eingangssignale.

Wenn als Leitungssystem die netzspannungsführenden Leitungen dienen, ist es vorteilhaft, wenn die Sekundärwicklung des Übertragers über mindestens einen Kondensator an das Leitungssystem angeschlossen ist. Durch geeignete Dimensionierung des Kondensators wird einerseits eine hohe Durchlässigkeit für die amplitudenmodulierte Wechselspannung, andererseits eine gute Sperrwirkung gegen Rückwirkungen durch die Netzfrequenz erreicht.

Es ist vorteilhaft, wenn ein Frequenzgenerator eingesetzt ist, dessen Ausgangssignal ein aus Rechteckimpulsen bestehender Impulszug ist. Als solcher Frequenzgenerator kann beispielsweise als besonders kostengünstiges Funktionselement ein astabiler Multivibrator eingesetzt sein.

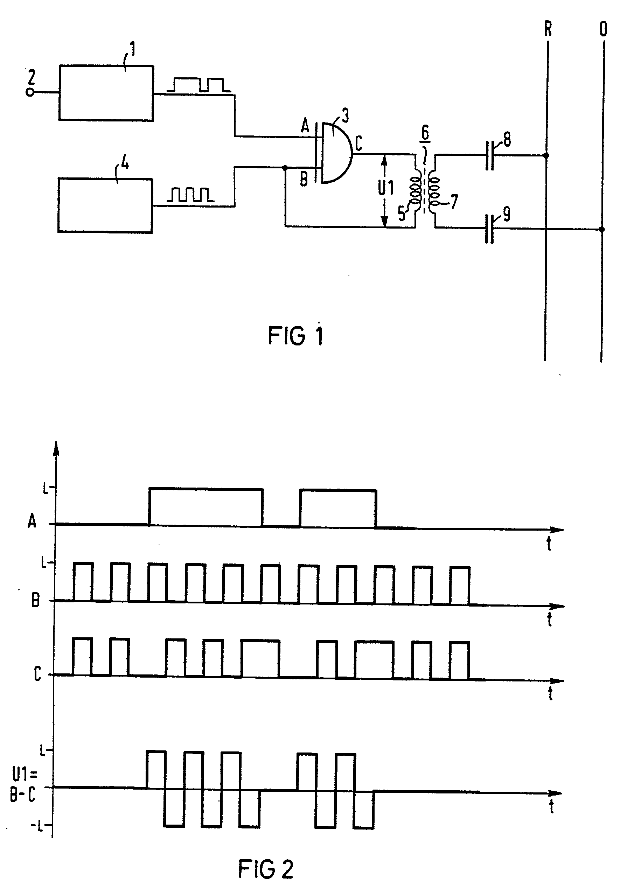

Die Erfindung wird im folgenden anhand eines Ausführungsbeispiels in den Fig. 1 und 2 näher erläutert. Dabei zeigt :

Figur 1 ein Schaltbild der erfindungsgemäßen Einrichtung und

Figur 2 Impulsdiagramme zur Erläuterung der Arbeitsweise der in Fig. 1 dargestellten Einrichtung.

In Fig. 1 ist mit dem Bezugszeichen 1 ein Codierer belegt, der ausgangsseitig als digitales Signal eine als Impulszug kodierte Information liefert, die an seiner Eingangsklemme 2 beispielsweise als Analogsignal ansteht. Solche Analogsignale können beispielsweise an eine andere Stelle eines Gebäudes zu übertragende Temperaturwerte eines Heizungssystems, eine BCD-kodierte Uhrzeit oder einfach Ein- bzw. Ausschaltbefehle für in einem Haus verteilte Beleuchtungskörper sein. Das Ausgangssignal des Codierers 1 ist an den Eingang A eines Exclusiv-ODER-Gatters 3 geführt.

Der zweite Eingang B des Exclusiv-ODER-Gatters 3 ist mit dem Ausgang eines Frequenzgenerators 4 verbunden. Der Frequenzgenerator 4 liefert ein periodisches Ausgangssignal, dessen Frequenz — wie bei der Amplitudenmodulation üblich — erheblich höher sein muß als die maximale Wiederholungsfrequenz der digitalen Signale des Codierers 1, da das Ausgangssignal des Frequenzgenerators 4 die Trägerfrequenz für die Übertragung der digitalen Signale darstellt. Im Ausführungsbeispiel ist der Frequenzgenerator 4 als Rechteckgenerator ausgebildet, dessen Ausgangssignal eine positive Rechteckspannung ohne weiteren Gleichspannungsanteil darstellt.

Die Primärwicklung 5 eines Übertragers 6 ist einerseits an den Ausgang C des Exclusiv-ODER-Gatters 3, andererseits an den Ausgang des Frequenzgenerators 4 angeschlossen. An dieser Primärwicklung 5 steht somit die Spannung U1 an, die der Differenz der momentanen Spannungswerte der am Eingang B bzw. dem Ausgang C des Exclusiv-ODER-Gatters 3 anstehenden Signale entspricht.

Die Sekundärwicklung 7 des im Ausführungsbeispiel mit einem Ferritkern ausgestatteten Übertragers 6 ist einerseits über den Kondensator 8 mit dem Phasenleiter R und andererseits über den Kondensator 9 mit dem Nulleiter der als Leitungssystem dienenden Netzleitungen innerhalb einer Wohnung oder eines Gebäudes verbunden. Die Kondensatoren 8 und 9 sperren den Rückfluß von netzfrequenten Signalen in den Übertrager 6, lassen jedoch andererseits aufgrund ihrer Dimensionierung die ins Leitungssystem einzuspeisenden Signale von gegenüber der Netzfrequenz erheblich höherer Frequenz in das Leitungssystem zu.

In Fig. 2 ist in der ersten Zeile das die zu übertragende Information beinhaltende codierte Signal am Eingang A des Exclusvi-ODER-Gatters 3 dargestellt. In der darunter liegenden zweiten Zeile ist das unipolare periodische Ausgangssignal des Frequenzgenerators 4 dargestellt, das am Eingang B des Exclusiv-ODER-Gatters ansteht. Dieses rechteckförmige Signal weist ein Tastverhältnis von 1 : 1 auf und schwankt zwischen den beiden festen Pegeln L und Null. In der dritten Zeile der Fig. 2 ist das am Ausgang C des Exclusiv-ODER-Gatters zustande gekommene Signal darstellt. In der vierten und letzten Zeile der Fig. 2 ist schließlich das an der Primärwicklung 5 des Übertragers 6 anstehende Signal U1 = B − C dargestellt. Liegt der Eingang A des Exclusiv-ODER-Gatters 3 auf dem Pegel Null, dann erscheint am Ausgang C des Exclusiv-ODER-Gatters 3 zu jedem Zeitpunkt ein Signal übereinstimmender Amplituden- und Phasenlage, so daß die Spannung U1 an der Primärwicklung 5 stets den Wert Null aufweist. Liegt dagegen der Eingang A des Exclusiv-ODER-Gatters 3 auf dem Signalpegel L, dann sind die Signale am Eingang B und am Ausgang C des Exclusiv-ODER-Gatters 3 antivalent. Damit kommt jeweils für die Zeitspanne, für die am Eingang A der Signalpegel L vorhanden ist, an der Primärwicklung 5 des Übertragers 6 eine um die Nullinie oszillierende Rechteckwechselspannung ohne Gleichspannungsanteil zustande, die über die Sekundärwicklung 7 des Übertragers 6 in das Leitungssystem R-O eingespeist wird. Jeweils für die Dauer, die das Signal am Eingang A auf L-Pegel ist, entsteht damit eine Rechteckwechselspannung zwischen den Spannungspegeln + L und − L, wohingegen in den Zeitspannen, in denen der Signalpegel am Eingang A den Wert O aufweist, die Spannung U1 einen konstanten Wert auf dem Pegel Null aufweist.

Damit ist durch die erfindungsgemäße Einrichtung die Einspeisung von in Form digitaler Signale kodierter Informationen mit kleiner Leistung zur Übertragung über kurze Entfernungen mit geringem Aufwand ermöglicht.

**Patentansprüche**

1. Einrichtung zur Einspeisung von digitalen Signalen in ein Leitungssystem in Form einer amplitudenmodulierten Wechselspannung, dadurch gekennzeichnet, daß die digitalen Signale an den einen Eingang (A) eines Exclusiv-ODER-Gatters (3) geführt sind, dessen zweiter Eingang (B) an den Ausgang eines Frequenzgenerators (4) angeschlossen ist, dessen periodisches Ausgangssignal unipolar und von höherer Frequenz ist als die maximale Wiederholungsfrequenz der digitalen Signale, daß die Primärwicklung (5) eines Übertragers (6) einerseits an den Ausgang des Frequenzgenerators (4), andererseits an den Ausgang (C) des Exclusiv-ODER-Gatters (3) angeschlossen ist und daß die Sekundärwicklung (7) des Übertragers (6) an zwei Leitungen (R, O) des Leitungssystems angeschlossen ist.

2. Einrichtung nach Anspruch 1, dadurch gekennzeichnet, daß als Übertrager (6) ein Übertrager mit einem Ferritkern eingesetzt ist.

3. Einrichtung nach Anspruch 1 oder 2, bei der als Leitungssystem die netzspannungsführenden Leitungen (R, O) dienen, dadurch gekennzeichnet, daß die Sekundärwicklung (7) des Übertragers (6) über mindestens einem Kondensator (8, 9) an das Leitungssystem (R, O) angeschlossen ist.

4. Einrichtung nach einem der Ansprüche 1 bis 3, dadurch gekennzeichnet, daß ein Frequenzgenerator (4) eingesetzt ist, dessen Ausgangssignal ein aus Rechteckimpulsen bestehender Impulszug ist.

**Claims**

1. Apparatus for feeding digital signals into a line system in the form of an amplitude-modulated alternating voltage, characterised in that the digital signals are fed to the first input (A) of an EXCLUSIVE-OR gate (3) whose second input (B) is connected to the output of a frequency generator (4) providing a periodic output signal that is unipolar and of a higher frequency than the maximum repetition frequency of the digital signals, that the primary winding (5) of a transformer (6) is connected to the output of the frequency generator (4) on the one hand and on the other hand to the output (C) of the EXCLUSIVE-OR gate (3), and that the secondary winding (7) of the transformer (6) is connected to two lines (R, O) of the line system.

2. Apparatus as claimed in Claim 1, characterised in that a transformer having a ferrite core is used as transformer (6).

3. Apparatus as claimed in Claim 1 or 2, in which the lines (R, O) which carry the mains voltage serve as line system, characterised in that the secondary winding (7) of the transformer (6) is connected to the line system (R, O) via at least one capacitor (8, 9).

4. Apparatus as claimed in one of the Claims 1 to 3, characterised in that a frequency generator (4) is used whose output signal is a pulse train composed of rectangular pulses.

## Revendications

1. Dispositif pour l'injection de signaux numériques dans un système de lignes sous forme d'une tension alternative modulée en amplitude, caractérisé en ce que les signaux numériques sont appliqués à une entrée (A) d'un élément OU-exclusif (3) dont la deuxième entrée (B) est reliée à la sortie d'un générateur de fréquence (4), dont le signal de sortie périodique est unipolaire et de fréquence plus élevée que la fréquence de répétition maximale des signaux numériques, que l'enroulement primaire (5) d'un transformateur (6) est relié d'un côté à la sortie du générateur de fréquence (4) et de l'autre côté à la sortie (C) de l'élément OU-exclusif (3) et que l'enroulement secondaire (7) du transformateur (6) est relié à deux lignes (R, O) du système de lignes.

2. Dispositif selon la revendication 1, caractérisé en ce que le transformateur (6) est un transformateur avec un noyau de ferrite.

3. Dispositif selon la revendication 1 ou 2, où le système de lignes est formé par des lignes (R, O) présentant la tension du secteur, caractérisé en ce que l'enroulement secondaire (7) du transformateur (6) est raccordé au système de lignes (R, O) à travers au moins un condensateur (8, 9).

4. Dispositif selon une des revendications 1 à 3, caractérisé en ce qu'il comprend un générateur de fréquence (4) dont le signal de sortie est un train d'impulsions rectangulaires.

FIG 1

FIG 2